(19) Europäisches Patentamt / European Patent Office / Office européen des brevets

(11) EP 4 712 169 A1

(12) EUROPEAN PATENT APPLICATION

(43) Date of publication:
**18.03.2026 Bulletin 2026/12**

(21) Application number: **25201521.9**

(22) Date of filing: **11.09.2025**

(51) International Patent Classification (IPC):
***H01M 4/58*** *(2010.01)* ***H01M 10/0525*** *(2010.01)*
***H01M 10/0567*** *(2010.01)*

(52) Cooperative Patent Classification (CPC):
**H01M 4/5825; H01M 10/0525; H01M 10/0567;**
H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.09.2024 KR 20240124011**

(71) Applicants:
- **SK On Co., Ltd.**
  **Seoul 03161 (KR)**
- **SK Innovation Co., Ltd.**
  **Seoul 03188 (KR)**

(72) Inventors:
- **PARK, Min Woo**
  **34124 Daejeon (KR)**
- **KIM, Jeong Yun**
  **34124 Daejeon (KR)**
- **KIM, Myoung Lae**
  **34124 Daejeon (KR)**
- **JEON, Hyun Ji**
  **34124 Daejeon (KR)**
- **CHO, In Haeng**
  **34124 Daejeon (KR)**

(74) Representative: **Prüfer & Partner mbB**
**Patentanwälte · Rechtsanwälte**
**Sohnckestraße 12**
**81479 München (DE)**

# (54) ELECTROLYTE FOR LITHIUM SECONDARY BATTERY AND LITHIUM SECONDARY BATTERY INCLUDING THE SAME

(57) An electrolyte for a lithium secondary battery according to exemplary embodiments includes an additive including a compound having a specific structure, an organic solvent and a lithium salt. Accordingly, a lithium secondary battery including the electrolyte for a lithium secondary battery exhibits improved low-temperature properties and high-temperature stability.

[FIG. 1]

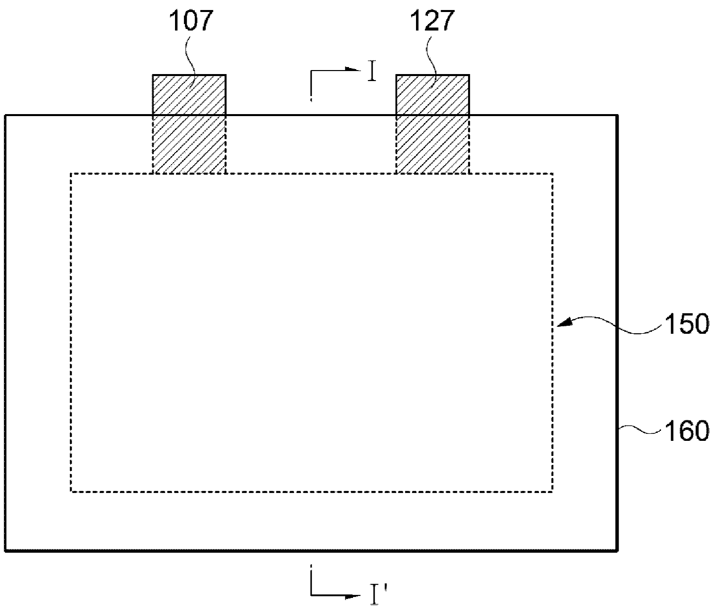




Processed by Luminess, 75001 PARIS (FR)

## Description

[BACKGROUND OF THE INVENTION]

1. Field of the Invention

The present disclosure relates to an electrolyte for a lithium secondary battery and a lithium secondary battery includi.ng the same. More specifically, the present disclosure relates to an electrolyte for a lithium secondary battery including a solvent and an electrolyte salt, and a lithium secondary battery including the electrolyte.

2. Description of the Related Art

Secondary batteries are batteries that can be repeatedly charged and discharged, and have been widely applied as power sources for portable electronic devices, such as mobile phones and laptop PCs. Among secondary batteries, a lithium secondary battery has a high operating voltage and a high energy density per unit weight, making it advantageous in terms of charging speed and weight reduction. In this regard, the lithium secondary battery has been actively developed and applied in various industrial fields.

A lithium secondary battery may include, for example, an electrode assembly including a cathode, an anode and a separation membrane interposed between the cathode and the anode, and an electrolyte in which the electrode assembly is impregnated.

The lithium secondary battery may further include, for example, an outer case in the form of a pouch for accommodating the electrode assembly and the electrolyte.

The cathode of a lithium secondary battery may be fabricated by, for example, applying a cathode slurry including a cathode active material, a binder, and, optionally, a conductive material, to a cathode current collector, followed by drying and roll-pressing.

When a lithium secondary battery is repeatedly charged and discharged, side reactions between the cathode active material and the electrolyte may occur, thereby degrading the stability and cycle life properties of the lithium secondary battery.

[SUMMARY OF THE INVENTION]

An object of the present disclosure is to provide an electrolyte for a lithium secondary battery having improved low-temperature properties and high-temperature stability.

Another object of the present disclosure is to provide a lithium secondary battery having improved low-temperature properties and high-temperature stability.

An electrolyte for a lithium secondary battery according to exemplary embodiments includes: an additive including a compound having a structure represented by Formula 1 below; an organic solvent; and a lithium salt.

[Formula 1]

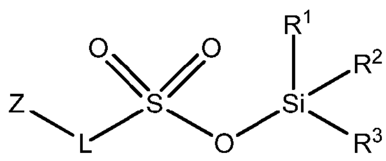

In Formula 1, $R^1$ to $R^3$ may each independently be an alkyl group having 1 to 10 carbon atoms, an alkoxy group having 1 to 10 carbon atoms, a hydroxy group, a halogen atom, or a hydrogen atom; L may be a single bond, an alkylene group having 1 to 10 carbon atoms, or an alkyleneoxy group having 1 to 10 carbon atoms; and Z may be a 5- or 6-membered heteroaryl group including at least one heteroatom selected from the group consisting of nitrogen, oxygen and sulfur, or a 5- or 6-membered heterocycloalkyl group including at least one heteroatom selected from the group consisting of nitrogen, oxygen and sulfur.

In some embodiments, $R^1$ to $R^3$ may each independently be an alkyl group having 1 to 6 carbon atoms, an alkoxy group having 1 to 6 carbon atoms, a hydroxy group, a halogen atom, or a hydrogen atom, L may be a single bond, an alkylene group having 1 to 6 carbon atoms, or an alkyleneoxy group having 1 to 6 carbon atoms, and Z may be a 5- or 6-membered heteroaryl group including at least one nitrogen atom or a 5- or 6-membered heterocycloalkyl group including at least one oxygen atom.

In some embodiments, $R^1$ to $R^3$ may each independently be an alkyl group having 1 to 4 carbon atoms, an alkoxy group having 1 to 4 carbon atoms, a hydroxy group, a halogen atom, or a hydrogen atom, L may be a single bond, an alkylene group having 1 to 4 carbon atoms, or an alkyleneoxy group having 1 to 4 carbon atoms, and Z may be a 5-membered heteroaryl group including two nitrogen atoms or a 5-membered heterocycloalkyl group including one oxygen atom.

In some embodiments, $R^1$ to $R^3$ may each independently be an alkyl group having 1 to 10 carbon atoms, L may be a single bond or an alkyleneoxy group having 1 to 10 carbon atoms, and Z may be a 5- or 6-membered heteroaryl group including two to four heteroatoms selected from the group consisting of nitrogen, oxygen and sulfur, or a 5- or 6-membered heterocycloalkyl group including one heteroatom selected from the group consisting of nitrogen, oxygen and sulfur.

In some embodiments, the compound having the structure represented by Formula 1 may include a compound having a structure represented by Formula 2-1 or Formula 2-2 below.

[Formula 2-1]

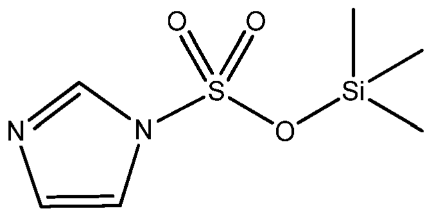

[Formula 2-2]

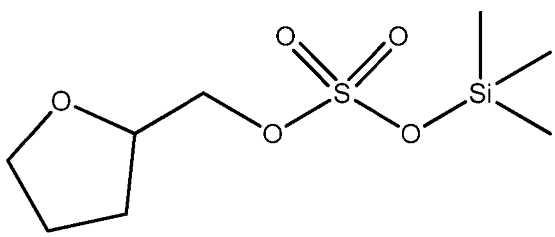

In some embodiments, the organic solvent may include at least one selected from the group consisting of a carbonate organic solvent, an ester organic solvent, an ether organic solvent, a ketone organic solvent, and an aprotic organic solvent.

In some embodiments, the organic solvent may include a cyclic carbonate solvent and a linear carbonate solvent.

In some embodiments, the content of the additive may be 0.1% by weight to 10% by weight based on the total weight of the electrolyte.

In some embodiments, the electrolyte may further include at least one auxiliary additive selected from the group consisting of a cyclic carbonate compound, a fluorine-containing carbonate compound, a sultone compound, a borate compound, a lithium phosphate compound and a sulfate compound.

In some embodiments, the content of the auxiliary additive may be 0.01% by weight to 10% by weight based on the total weight of the electrolyte.

In some embodiments, the electrolyte may further include an auxiliary additive including a cyclic carbonate compound and a fluorine-containing carbonate compound.

A lithium secondary battery according to exemplary embodiments may include: an electrode assembly including a cathode and anode that are repeatedly stacked; and the electrolyte for a lithium secondary battery, which impregnates the electrode assembly.

In some embodiments, the cathode may include a cathode active material including a lithium phosphate-based active material.

In some embodiments, the cathode active material may include lithium metal phosphate particles represented by Formula 3 below.

[Formula 3] $Li_wM_xP_yO_{4+z}$

In Formula 3, $0.9 \leq w \leq 1.2$, $0.99 \leq x \leq 1.01$, $0.9 \leq y \leq 1.2$, $-0.1 \leq z \leq 0.1$, and M may be at least one selected from the group consisting of Fe, Ni, Mn, Ti, and V.

In some embodiments, M may be Fe.

The electrolyte for a lithium secondary battery according to exemplary embodiments may form a uniform and highly ion-conductive solid electrolyte interphase (SEI) on the electrode surface.

The lithium secondary battery according to exemplary embodiments may include the electrolyte for a lithium secondary battery, thereby exhibiting improved low-temperature performance and high-temperature storage stability.

The electrolyte may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic plan view of a lithium secondary battery according to exemplary embodiments; and
FIG. 2 is a schematic cross-sectional view of the lithium secondary battery according to exemplary embodiments.

[DETAILED DESCRIPTION OF THE INVENTION]

An electrolyte for a lithium secondary battery according to exemplary embodiments may include an additive including a compound having a specific structure, an organic solvent and a lithium salt.

In addition, a lithium secondary battery according to exemplary embodiments may include an electrode assembly including repeatedly stacked cathodes and anodes, and the electrolyte for a lithium secondary battery that impregnates the electrode assembly.

Therefore, the cycle life properties and high-temperature storage properties of the lithium secondary battery may be improved.

As used herein, the "X compound" may refer to a compound including an X unit attached to a matrix, or a derivative of the X compound.

**<Electrolyte for a lithium secondary battery>**

The electrolyte for a lithium secondary battery according to exemplary embodiments (hereinafter, also abbreviated as "electrolyte") may include an additive including a compound having a structure represented by Formula 1 below, an organic solvent and a lithium salt.

Hereinafter, the components of the present disclosure will be described in more detail.

**Additive**

The electrolyte for a lithium secondary battery according to exemplary embodiments may include an additive including a compound having a structure represented by Formula 1 below.

[Formula 1]

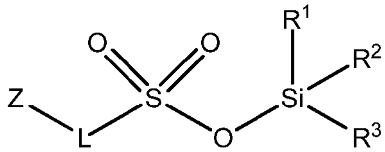

In Formula 1, $R^1$ to $R^3$ may each independently be an alkyl group having 1 to 10 carbon atoms, an alkoxy group having 1 to 10 carbon atoms, a hydroxy group, a halogen atom, or a hydrogen atom, L may be a single bond, an alkylene group having 1 to 10 carbon atoms, or an alkyleneoxy group having 1 to 10 carbon atoms, and Z may be a 5- or 6-membered heteroaryl group including at least one heteroatom selected from the group consisting of nitrogen, oxygen and sulfur, or a 5- or 6-membered heterocycloalkyl group including at least one heteroatom selected from the group consisting of nitrogen, oxygen and sulfur.

For example, $R^1$ to $R^3$ may each independently be an alkyl group having 1 to 6 carbon atoms, an alkoxy group

having 1 to 6 carbon atoms, a hydroxy group, a halogen atom, or a hydrogen atom, and $R^1$ to $R^3$ may each independently be an alkyl group having 1 to 4 carbon atoms, an alkoxy group having 1 to 4 carbon atoms, a hydroxy group, a halogen atom or a hydrogen atom.

For example, $R^1$ to $R^3$ may each independently be an alkyl group having 1 to 10 carbon atoms, an alkyl group having 1 to 6 carbon atoms, an alkyl group having 1 to 4 carbon atoms, an alkyl group having 1 to 3 carbon atoms, or a methyl group, and $R^1$ to $R^3$ may all be the same alkyl group having carbon atoms within the above-described range.

For example, L may be a single bond, an alkylene group having 1 to 6 carbon atoms, or an alkyleneoxy group having 1 to 6 carbon atoms, and L may be a single bond, an alkylene group having 1 to 4 carbon atoms, or an alkyleneoxy group having 1 to 4 carbon atoms.

For example, L may be a single bond or an alkyleneoxy group having 1 to 10 carbon atoms, a single bond or an alkyleneoxy group having 1 to 6 carbon atoms, a single bond or an alkyleneoxy group having 1 to 4 carbon atoms, or a single bond or a methyleneoxy group.

For example, Z may be a 5- or 6-membered heteroaryl group including at least one nitrogen atom, or a 5- or 6-membered heterocycloalkyl group including at least one oxygen atom.

For example, Z may be a 5-membered heteroaryl group including two nitrogen atoms or a 5-membered heterocycloalkyl group including one oxygen atom.

For example, Z may be a 5- or 6-membered heteroaryl group including two to four heteroatoms selected from the group consisting of nitrogen, oxygen and sulfur, or a 5- or 6-membered heterocycloalkyl group including one heteroatom selected from the group consisting of nitrogen, oxygen and sulfur.

For example, Z may be a 5- or 6-membered heteroaryl group including two heteroatoms selected from the group consisting of nitrogen, oxygen and sulfur, or a 5- or 6-membered heterocycloalkyl group including one oxygen atom.

For example, Z may be a 5- or 6-membered heteroaryl group including at least one nitrogen atom, a 5-membered heteroaryl group including at least one nitrogen atom, a 5- or 6-membered heteroaryl group including two nitrogen atoms, or a 5-membered heteroaryl group including two nitrogen atoms.

For example, Z may be a 5- or 6-membered heterocycloalkyl group including at least one oxygen atom, a 5-membered heterocycloalkyl group including at least one oxygen atom, a 5- or 6-membered heterocycloalkyl group including one oxygen atom, or a 5-membered heterocycloalkyl group including one oxygen atom.

For example, Z may be imidazole, tetrahydrofuran, tetrahydrothiophene, pyrrolidine, thiophene, pyrrole, pyrazole, thiazole, thiadiazole, isothiazole, isoxazole, oxazole, oxadiazole, triazole, tetrazole, pyridine, pyrazine or pyridazine, and Z may be imidazole or tetrahydrofuran.

For example, the hydrogen atoms of the above-described alkyl group, alkoxy group, heteroaryl group and heterocycloalkyl group may be substituted with at least one of an alkyl group having 1 to 6 carbon atoms, an alkenyl group having 2 to 6 carbon atoms, an alkoxy group having 1 to 6 carbon atoms, a cycloalkyl group having 3 to 7 carbon atoms, a 5- to 7-membered heterocycloalkyl group and an amino group.

In some embodiments, the compound having the structure represented by Formula 1 above may include a compound having a structure represented by Formula 2-1 or Formula 2-2 below.

[Formula 2-1]

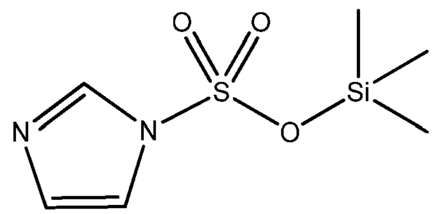

[Formula 2-2]

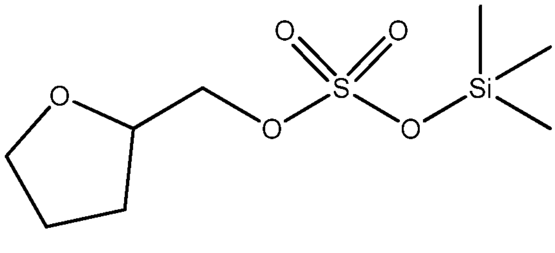

For example, when an additive including a compound having a structure represented by Formula 1 is included in an electrolyte for a lithium secondary battery, a uniform and highly ion-conductive solid electrolyte interphase (SEI) film may be formed on the electrode surface.

For example, the additive may form a robust S-O group-based SEI film on the electrode. The SEI film stably protects the electrode surface, thereby stabilizing the electrode interface and suppressing side reactions with the electrolyte. In addition, it may suppress the increase in internal resistance of the battery even during high-temperature storage.

For example, the SEI film formed by the additive may have low resistance and may facilitate the migration of lithium ions between the electrode and the electrolyte, thereby improving the discharge capacity at low temperatures.

For example, when a heteroaryl group is linked to the sulfonate group in the compound, $\pi$-$\pi$ interactions may form an SEI film with a stable structure even after long-term charge and discharge.

For example, when a trialkylsilyl group is included in the compound, hydrogen fluoride (HF) and moisture ($H_2O$) in the electrolyte may be removed, thereby improving cell cycle life properties and high-temperature storage properties. The trialkylsilyl group may be a trimethylsilyl group.

Accordingly, the high-temperature storage properties and low-temperature properties of the lithium secondary battery may be improved.

In some embodiments, the content of the additive may be 0.1% by weight ("wt%") to 10 wt% based on the total weight of the electrolyte.

For example, the content of the additive may be 0.2 wt% to 8 wt%, 0.3 wt% to 5 wt%, 0.4 wt% to 3 wt%, 0.5 wt% to 2 wt%, or 0.1 wt% to 2 wt% based on the total weight of the electrolyte.

Within the above range, a uniform and highly ion-conductive SEI film may be formed, and the migration of lithium ions and the activity of the cathode active material may not be inhibited.

## Auxiliary additive

The electrolyte for a lithium secondary battery according to exemplary embodiments may further include at least one auxiliary additive selected from the group consisting of a cyclic carbonate compound, a fluorine-containing carbonate compound, a sultone compound, a borate compound, a lithium phosphate compound and a sulfate compound.

In some embodiments, the electrolyte may further include an auxiliary additive including a cyclic carbonate compound and a fluorine-containing carbonate compound, for example, the electrolyte may further include an auxiliary additive consisting of a cyclic carbonate compound and a fluorine-containing carbonate compound.

When the additive and the auxiliary additive are used in combination, a lithium secondary battery having improved low-temperature properties and high-temperature storage properties may be efficiently implemented.

For example, the cyclic carbonate compound may include vinylene carbonate (VC), and vinyl ethylene carbonate (VEC), etc.

For example, the fluorine-containing carbonate compound may include a fluorine atom or a fluorine-substituted group (e.g., a fluorine-substituted alkyl group such as $-CF_3$) bonded to at least one carbon atom of the carbonate compound.

In some embodiments, the fluorine-containing carbonate compound may include a fluorine-containing cyclic carbonate compound having a ring structure. For example, the fluorine-containing cyclic carbonate compound may have a 5- to 7-membered ring structure.

For example, the fluorine-containing cyclic carbonate compound may include fluoroethylene carbonate (FEC), etc.

In some embodiments, the sultone compound may include at least one selected from the group consisting of an alkyl sultone compound and an alkenyl sultone compound.

In some embodiments, the sultone compound may include both an alkyl sultone compound and an alkenyl sultone compound.

For example, the alkyl sultone compound may include 1,3-propane sultone (PS), and 1,4-butane sultone, etc.

For example, the alkenyl sultone compound may include ethene sultone, 1,3-propene sultone (PRS), 1,4-butene sultone, and 1-methyl-1,3-propene sultone, etc.

In some embodiments, the sulfate compound may include a cyclic sulfate compound having a ring structure. The cyclic sulfate compound may have a 5- to 7-membered ring structure.

For example, A cyclic sulfate compound may include 1,2-ethylene sulfate (ESA), trimethylene sulfate (TMS), 1,2-propylene sulfate, and methyltrimethylene sulfate (MTMS), etc.

For example, the cyclic sulfite compound may include ethylene sulfite, and butylene sulfite, etc.

For example, the borate compound may include lithium bis(oxalate) borate, etc.

For example, the lithium phosphate compound may include lithium difluorophosphate ($LiPO_2F_2$), and lithium difluorobis(oxalato)phosphate, etc.

In one embodiment, the content of the auxiliary additive may be 0.01 wt% to 10 wt% based on the total weight of the electrolyte.

For example, the content of the auxiliary additive may be 0.05 wt% to 9 wt%, 0.5 wt% to 8 wt%, 0.8 wt% to 7 wt%, 1.0 wt% to 6 wt%, 1.5 wt% to 5 wt%, or 2 wt% to 4 wt% based on the total weight of the electrolyte.

Within the above range, the durability of the SEI may be enhanced without inhibiting the function of the additive.

In some embodiments, the weight ratio of the auxiliary additive to the weight of the additive in the electrolyte may be 0.1 to 15.

For example, the weight ratio may be 0.2 to 14, 0.3 to 13, 0.4 to 12, or 0.5 to 10. Within this range, the high-temperature storage properties and low-temperature properties of the lithium secondary battery may be further improved.

In one embodiment, a cyclic carbonate compound and a fluorine-containing carbonate compound may be used together as the auxiliary additive.

In some embodiments, the auxiliary additive may further include at least one selected from the group consisting of a borate compound, a nitrile compound, an amine compound, a silane compound and a benzene compound.

For example, the borate compound may include at least one selected from the group consisting of lithium tetraphenyl borate and lithium difluoro(oxalato)borate (LiODFB).

**For** example, the nitrile compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

For example, the amine compound may include at least one selected from the group consisting of triethanolamine and ethylenediamine.

For example, the silane compound may include tetravinylsilane, etc.

For example, the benzene compound may include at least one selected from the group consisting of monofluorobenzene, difluorobenzene, trifluorobenzene and tetrafluorobenzene.

## Organic solvent and lithium salt

For example, the organic solvent may include an organic compound which has sufficient solubility for the lithium salt and the additive and the auxiliary additive, and is electrochemically stable without exhibiting reactivity in the lithium secondary battery.

In some embodiments, the organic solvent may include at least one of a carbonate solvent, an ester solvent, an ether solvent, a ketone solvent, an alcohol solvent and an aprotic solvent.

In some embodiments, the organic solvent may include a carbonate solvent, and the carbonate solvent may include a linear carbonate solvent and a cyclic carbonate solvent.

For example, the linear carbonate solvent may include at least one of dimethyl carbonate (DMC), ethyl methyl carbonate (EMC), diethyl carbonate (DEC), methyl propyl carbonate, and ethyl propyl carbonate and dipropyl carbonate, etc.

For example, the cyclic carbonate solvent may include at least one of ethylene carbonate (EC), propylene carbonate (PC), and butylene carbonate, etc.

In some embodiments, the organic solvent may include a larger amount of the linear carbonate solvent than the cyclic carbonate solvent, based on the volume.

In some embodiments, the volume ratio of the cyclic carbonate solvent to the volume of the linear carbonate solvent in the organic solvent may be 1/9 to 1. For example, the volume ratio may be 1/9 to 1, 1/9 to 2/3, 1/6 to 2/3, or 1/4 to 2/3. Within this range, the high-temperature storage properties and low-temperature properties of the lithium secondary battery may be further improved.

For example, the ester solvent may include at least one of methyl acetate (MA), ethyl acetate (EA), n-propyl acetate (n-PA), 1,1-dimethylethyl acetate (DMEA), methyl propionate (MP), ethyl propionate (EP), gamma-butyrolactone (GBL), decanolide, valerolactone, mevalonolactone and caprolactone.

For example, the ester solvent may include carboxylate ester solvent.

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone solvent may include cyclohexanone, etc.

For example, the alcohol solvent may include at least one of ethyl alcohol and isopropyl alcohol.

For example, the aprotic solvent may include at least one of a nitrile solvent, an amide solvent (e.g., dimethylformamide), a dioxolane solvent (e.g., 1,3-dioxolane), and a sulfolane solvent.

In some embodiments, the electrolyte may include a lithium salt.

The lithium may be represented by $Li^+X^-$, and as an anion (X-) of the lithium salt, $F^-$, $Cl^-$, $Br^-$, $I^-$, $NO_3^-$, $N(CN)_2^-$, $BF_4^-$,

$ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, etc. may be exemplified.

In some embodiments, the lithium salt may include at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In one embodiment, the lithium salt may include at least one selected from the group consisting of $LiPF_6$, LiFSI and LiTFSI.

In some embodiments, the lithium salt may be included in a concentration of 0.01 M to 5 M, 0.01 M to 4 M, 0.5 M to 3 M, or 0.5 M to 2 M based on the organic solvent. Within this concentration range, lithium ions and/or electrons may migrate smoothly during charging and discharging of the lithium secondary battery.

**<Lithium secondary battery>**

FIGS. 1 and 2 are schematic plan and cross-sectional views, respectively, illustrating a lithium secondary battery according to exemplary embodiments. FIG. 2 is a cross-sectional view taken along line I-I' of FIG. 1.

Referring to FIGS. 1 and 2, the lithium secondary battery may include an electrode assembly 150 including a cathode 100, an anode 130, and a separation membrane 140 interposed between the cathode and the anode.

For example, the electrode assembly 150 may include the cathodes 100 and the anodes 130 that are repeatedly stacked, and the electrode assembly 150 may be accommodated in a case 160 together with the above-described electrolyte according to exemplary embodiments to be impregnated.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector may have a thickness of 10 μm to 50 μm.

For example, the cathode active material may include a compound capable of reversibly intercalating and deintercalating lithium ions.

In some embodiments, the cathode 100 may include a cathode active material including a lithium phosphate-based active material.

In some embodiments, the cathode active material may include lithium metal phosphate particles having a structure represented by Formula 3 below.

[Formula 3] $$Li_wM_xP_yO_{4+z}$$

In Formula 3, w, x, y and z may satisfy $0.9 \le w \le 1.2$, $0.99 \le x \le 1.01$, $0.9 \le y \le 1.2$, and $-0.1 \le z \le 0.1$, and M may be at least one selected from the group consisting of Fe, Ni, Mn, Ti and V.

For example, M may be Fe, and the cathode active material may include a lithium iron phosphate (LFP) active material (e.g., $LiFePO_4$).

The lithium iron phosphate (LFP) active material has an olivine structure, which is more stable than a layered structure, and may also have excellent long-term cycle life. For example, when the above-described additive is included in the electrolyte, the low-temperature properties, such as the output properties of the battery at sub-zero temperatures, may be improved.

In some embodiments, the cathode active material may include a lithium manganese oxide-based active material, a lithium nickel oxide-based active material, or a lithium iron phosphate (LFP)-based active material (e.g., $LiFePO_4$).

In some embodiments, the cathode active material may include a manganese (Mn)-rich active material, or a lithium (Li)-rich layered oxide (LLO)/over-lithiated oxide (OLO)-based active material, and a cobalt (Co)-less active material, which has a chemical structure or a crystal structure represented by Formula 4, for example.

For example, the cathode active material may include a chemical structure or crystal structure represented by Formula 4 below.

[Formula 4] $$p[Li_2MnO_3]\cdot(1-p)[LiqJO_2]$$

In Formula 4, p and q may satisfy $0<p<1$, $0.9 \le q \le 1.2$, and J may include at least one element selected from Mn, Ni, Fe, Cr, V, Cu, Zn, Ti, Al, Mg and B.

For example, the cathode active material may be dispersed in a solvent to prepare a cathode slurry. The cathode slurry may be coated on the cathode current collector 105, and then dried and roll-pressed to fabricate the cathode 100.

The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally may further include a conductive material, a thickener and the like.

Non-limiting examples of solvents used in the preparation of the cathode slurry include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode slurry layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$.

As the thickener, for example, carboxymethyl cellulose (CMC) may be used.

The anode 130 may include an anode current collector 125 and an anode active material layer 120 disposed on at least one surface of the anode current collector 125.

For example, non-limiting examples of the anode current collector 125 may include a copper foil, a nickel foil, a stainless steel foil, a titanium foil, a nickel foam, a copper foam, a polymer substrate coated with a conductive metal and the like. The anode current collector may have, for example, a thickness of 10 $\mu$m to 50 $\mu$m, but it is not limited thereto.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing active material may provide further increased capacity properties. The silicon-containing active material may include Si, $SiO_x$ ($0<x<2$), a silicon-carbon composite, a metal-doped silicate, or $SiO_x$ ($0<x<2$). The metal may include lithium and/or magnesium.

For example, the anode active material may be dispersed in a solvent to prepare an anode slurry. The anode slurry may be coated on the anode current collector, and then dried and roll-pressed to prepare an anode. The coating process may be performed using methods such as gravure coating, slot die coating, simultaneous multilayer die coating, imprinting, doctor blade coating, dip coating, bar coating or casting, etc., but it is not limited thereto. The anode slurry may further include a binder, and optionally may further include a conductive material, a thickener and the like.

In some embodiments, the anode may include an anode active material layer in the form of a lithium metal formed through a deposition/coating process.

Non-limiting examples of the solvent for the anode slurry may include water, pure water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

In one embodiment, the separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 $\mu$m to 20 $\mu$m, but in the present disclosure, it is not limited thereto.

The separation membrane may include a porous polymer film or a porous non-woven fabric. The porous polymer film may include a polyolefin polymer such as an ethylene polymer, a propylene polymer, an ethylene/butene copolymer,

an ethylene/hexene copolymer, and an ethylene/methacrylate copolymer. The porous non-woven fabric may include glass fibers having a high melting point, polyethylene terephthalate fibers and the like.

The separation membrane may also include a ceramic material. For example, inorganic particles may be coated on the polymer film or dispersed in the polymer film to improve heat resistance.

The separation membrane may have a single-layer or multi-layer structure including the above-described polymer film and/or non-woven fabric.

According to exemplary embodiments, the cathode 100, the anode 130, and the separation membrane 140 may be repeatedly disposed to form the electrode assembly 150. In some embodiments, the electrode assembly 150 may have a jelly roll shape formed by winding, stacking, z-folding, or stack-folding the separation membrane 140.

In one embodiment, the electrode assembly 150 may have a jelly roll shape formed by winding the cathode 100, the anode 130, and the separation membrane 140 together. In one embodiment, the electrode assembly 150 may have a jelly roll shape in which the notched cathodes and anodes are arranged in spaces formed by repeatedly z-folding the separation membrane 140.

In one embodiment, the electrode assembly may be formed by repeatedly stacking the cathode, the anode, and the separation membrane, each being cut or separated into layers.

For example, electrode tabs (cathode tabs and anode tabs) may protrude from the cathode current collector 105 and the anode current collector 125, respectively, and may extend to one side of the case 160. The electrode tabs may be fused together with the one side of the case 160 to form electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with an electrolyte to define the lithium secondary battery.

The invention is also defined by the following aspects:

Aspect 1. An electrolyte for a lithium secondary battery comprising:

an additive comprising a compound having a structure represented by Formula 1 below;
an organic solvent; and
a lithium salt:

[Formula 1]

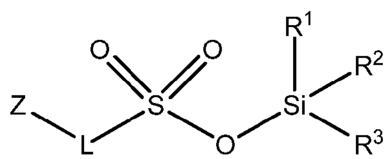

(in Formula 1, $R^1$ to $R^3$ are each independently an alkyl group having 1 to 10 carbon atoms, an alkoxy group having 1 to 10 carbon atoms, a hydroxy group, a halogen atom, or a hydrogen atom;
L is a single bond, an alkylene group having 1 to 10 carbon atoms, or an alkyleneoxy group having 1 to 10 carbon atoms; and
Z is a 5- or 6-membered heteroaryl group comprising at least one heteroatom selected from the group consisting of nitrogen, oxygen and sulfur, or a 5- or 6-membered heterocycloalkyl group comprising at least one heteroatom selected from the group consisting of nitrogen, oxygen and sulfur).

Aspect 2. The electrolyte for a lithium secondary battery according to aspect 1, wherein $R^1$ to $R^3$ are each independently an alkyl group having 1 to 6 carbon atoms, an alkoxy group having 1 to 6 carbon atoms, a hydroxy group, a halogen atom, or a hydrogen atom,

L is a single bond, an alkylene group having 1 to 6 carbon atoms, or an alkyleneoxy group having 1 to 6 carbon atoms, and
Z is a 5- or 6-membered heteroaryl group comprising at least one nitrogen atom or a 5- or 6-membered heterocycloalkyl group comprising at least one oxygen atom.

Aspect 3. The electrolyte for a lithium secondary battery according to any one of aspects 1 and 2, wherein $R^1$ to $R^3$ are each independently an alkyl group having 1 to 4 carbon atoms, an alkoxy group having 1 to 4 carbon atoms, a hydroxy

group, a halogen atom, or a hydrogen atom,

L is a single bond, an alkylene group having 1 to 4 carbon atoms, or an alkyleneoxy group having 1 to 4 carbon atoms, and
Z is a 5-membered heteroaryl group comprising two nitrogen atoms or a 5-membered heterocycloalkyl group comprising one oxygen atom.

Aspect 4. The electrolyte for a lithium secondary battery according to any one of aspects 1 to 3, wherein $R^1$ to $R^3$ are each independently an alkyl group having 1 to 10 carbon atoms,

L is a single bond or an alkyleneoxy group having 1 to 10 carbon atoms, and
Z is a 5- or 6-membered heteroaryl group comprising two to four heteroatoms selected from the group consisting of nitrogen, oxygen and sulfur, or a 5- or 6-membered heterocycloalkyl group comprising one heteroatom selected from the group consisting of nitrogen, oxygen and sulfur.

Aspect 5. The electrolyte for a lithium secondary battery according to any one of aspects 1 to 4, wherein the compound having the structure represented by Formula 1 comprises a compound having a structure represented by Formula 2-1 or Formula 2-2 below:

[Formula 2-1]

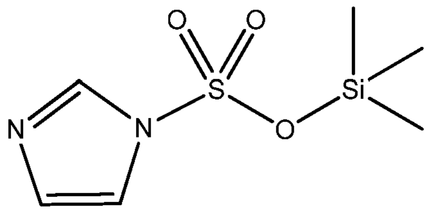

[Formula 2-2]

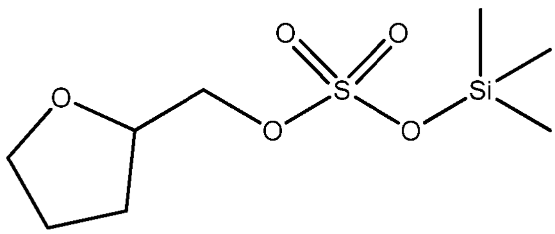

Aspect 6. The electrolyte for a lithium secondary battery according to any one of aspects 1 to 5, wherein the organic solvent comprises at least one selected from the group consisting of a carbonate organic solvent, an ester organic solvent, an ether organic solvent, a ketone organic solvent, and an aprotic organic solvent.
Aspect 7. The electrolyte for a lithium secondary battery according to any one of aspects 1 to 6, wherein the organic solvent comprises a cyclic carbonate solvent and a linear carbonate solvent.
Aspect 8. The electrolyte for a lithium secondary battery according to any one of aspects 1 to 7, wherein the content of the additive is 0.1% by weight to 10% by weight based on the total weight of the electrolyte.
Aspect 9. The electrolyte for a lithium secondary battery according to any one of aspects 1 to 8, wherein the electrolyte further comprises at least one auxiliary additive selected from the group consisting of a cyclic carbonate compound, a fluorine-containing carbonate compound, a sultone compound, a borate compound, a lithium phosphate compound and a sulfate compound.
Aspect 10. The electrolyte for a lithium secondary battery according to aspect 9, wherein the content of the auxiliary additive is 0.01% by weight to 10% by weight based on the total weight of the electrolyte.
Aspect 11. The electrolyte for a lithium secondary battery according to any one of aspects 1 to 10, wherein the electrolyte further comprises an auxiliary additive comprising a cyclic carbonate compound and a fluorine-containing carbonate compound.
Aspect 12. A lithium secondary battery comprising:

an electrode assembly comprising a cathode and anode that are repeatedly stacked; and
the electrolyte for a lithium secondary battery according to any one of aspects 1 to 11, which impregnates the electrode assembly.

Aspect 13. The lithium secondary battery according to aspect 12, wherein the cathode comprises a cathode active material comprising a lithium phosphate-based active material.
Aspect 14. The lithium secondary battery according to aspect 13, wherein the cathode active material comprises lithium metal phosphate particles represented by Formula 3 below:

[Formula 3] $Li_wM_xP_yO_{4+z}$

(in Formula 3, $0.9 \leq w \leq 1.2$, $0.99 \leq x \leq 1.01$, $0.9 \leq y \leq 1.2$, $-0.1 \leq z \leq 0.1$, and M is at least one selected from the group consisting of Fe, Ni, Mn, Ti, and V).
Aspect 15. The lithium secondary battery according to aspect 14, wherein M is Fe.

**<Preparative Example>**

**Synthesis Example 1: Preparation of Additive I (trimethylsilyl 1H-imidazole-1-sulfonate)**

Trimethylsilyl imidazole (1.28 g, 9.1 mmol) and 10 ml of dichloromethane were introduced into a round-bottom flask and stirred. After cooling to 0 °C, trimethylsilyl chlorosulfonate (1.72 g, 9.1 mmol) diluted with 10 ml of dichloromethane was slowly added to the reaction solution and stirred at room temperature for 2 hours. After completion of the reaction, the reactant was concentrated under reduced pressure to remove the solvent, and the precipitate was filtered. The obtained solid was washed with anhydrous hexane and vacuum-dried to obtain 1.61 g of Additive I having a structure represented by Formula 2-1 below (yield: 80%).

[Formula 2-1]

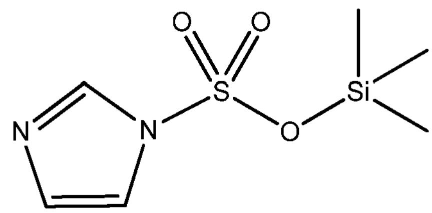

**<Examples and Comparative Examples>**

**Example 1**

**(1) Preparation of electrolyte**

A 1.2 M $LiPF_6$ solution (a mixed solvent of ethylene carbonate (EC) and ethyl methyl carbonate (EMC) at a volume ratio of 25:75) was prepared.
Based on the total weight (100 wt%) of the electrolyte, 1 wt% of fluoroethylene carbonate (FEC), 2 wt% of vinylene carbonate (VC), and 0.5 wt% of Additive I prepared in the preparative example were added to the $LiPF_6$ solution to prepare an electrolyte.

**(2) Manufacture of lithium secondary battery**

A cathode slurry was prepared by mixing and dispersing $LiFePO_4$ as a cathode active material, carbon black as a conductive material, and polyvinylidene fluoride (PVDF) as a binder at a weight ratio of 92:5:3 in N-methyl-2-pyrrolidone (NMP).
The cathode slurry was uniformly applied to an aluminum foil (thickness: 15 μm) having a protrusion part (a cathode tab) on one side, excluding the protrusion part, and then dried and roll-pressed to fabricate a cathode.
An anode slurry was prepared by mixing an anode active material including artificial graphite and natural graphite at a weight ratio of 7:3, carbon black as a conductive material, styrene-butadiene rubber (SBR) as a binder, and carboxymethyl cellulose (CMC) as a thickener at a weight ratio of 95:3: 1:1 in distilled water.

The anode slurry was uniformly applied to a copper foil (thickness: 15 μm) having a protrusion part (an anode tab) on one side, excluding the protrusion part, and then dried and roll-pressed to fabricate an anode.

A polyethylene separation membrane (thickness: 20 μm) was interposed between the cathode and the anode to form an electrode assembly. Then, a cathode lead and an anode lead were welded and connected to the cathode tab and the anode tab, respectively.

The electrode assembly was placed in a pouch (case) so that some regions of the cathode lead 107 and anode lead 127 were exposed to the outside, and three sides of the pouch were sealed, leaving one side as an electrolyte injection region.

After injecting the electrolyte prepared in (1) above through the electrolyte injection region, the remaining side as the electrolyte injection region was also sealed, followed by impregnation for 12 hours to manufacture a lithium secondary battery.

**Example 2**

An electrolyte and a lithium secondary battery were prepared in the same manner as in Example 1, except that the content of Additive I was 10 wt% instead of 0.5 wt%.

**Example 3**

An electrolyte and a lithium secondary battery were prepared in the same manner as in Example 1, except that the content of Additive I was 0.05 wt% instead of 0.5 wt%.

**Example 4**

An electrolyte and a lithium secondary battery were prepared in the same manner as in Example 1, except that the content of Additive I was 15 wt% instead of 0.5 wt%.

**Comparative Example 1**

An electrolyte and a lithium secondary battery were prepared in the same manner as in Example 1, except that lithium difluorophosphate(W3) was used instead of Additive I.

**Comparative Example 2**

An electrolyte and a lithium secondary battery were prepared in the same manner as in Example 1, except that 0.5 wt% of Additive II (trimethylsilyl ethene sulfonate) having a structure represented by Formula 5-1 below was used instead of Additive I.

[Formula 5-1]

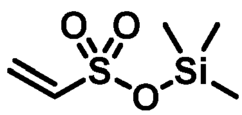

**Comparative Example 3**

An electrolyte and a lithium secondary battery were prepared in the same manner as in Example 1, except that 0.5 wt% of Additive III (trimethylsilyl 4-methylbenzene sulfonate) having a structure represented by Formula 5-2 below was used instead of Additive I.

[Formula 5-2]

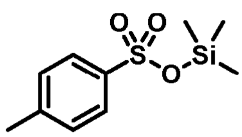

The electrolyte compositions of the examples and comparative examples are described in Table 1 below.

[TABLE 1]

| | Lithium salt | Additive (wt%) | Auxiliary additive (wt%) | | |
|---|---|---|---|---|---|
| | | | FEC | VC | W3 |
| Example 1 | $LiPF_6$ (1.2M) | Additive I (0.5) | 1 | 2 | - |
| Example 2 | $LiPF_6$ (1.2M) | Additive I (10) | 1 | 2 | - |
| Example 3 | $LiPF_6$ (1.2M) | Additive I (0.05) | 1 | 2 | - |
| Example 4 | $LiPF_6$ (1.2M) | Additive I (15) | 1 | 2 | - |
| Comparative Example 1 | $LiPF_6$ (1.2M) | - | 1 | 2 | 0.5 |
| Comparative Example 2 | $LiPF_6$ (1.2M) | Additive II (0.5) | 1 | 2 | - |
| Comparative Example 3 | $LiPF_6$ (1.2M) | Additive III (0.5) | 1 | 2 | - |

The components described in Table 1 are as follows:

Additive I: Trimethylsilyl 1H-imidazole-1-sulfonate
Additive II: Trimethylsilyl ethene sulfonate
Additive III: Trimethylsilyl 4-methylbenzene sulfonate (CAS No. 17872-98-9)
FEC: Fluoroethylene carbonate
VC: Vinylene carbonate
W3: Lithium difluorophosphate ($LiPO_2F_2$)

**<Experimental Examples>**

**Experimental Example 1: Evaluation of initial performance**

(1) Evaluation initial resistance (25 °C)

**For** the lithium secondary batteries manufactured in the examples and comparative examples, charging and discharging were performed at each corresponding C-rate for 10 seconds, while the C-rate was sequentially varied to 0.2C, 0.5C, 1.0C, 1.5C, 2.0C, 2.5C and 3.0C at a 60% state of charge (SOC) point. The terminal voltage points at each C-rate were plotted to construct a linear equation, and the slope of the resulting line was adopted as the DC internal resistance (DCIR). The results are shown in Table 2 below.

**Experimental Example 2: Evaluation of low-temperature performance**

(1) Evaluation of low-temperature resistance

After the lithium secondary batteries of the examples and comparative examples were left in a chamber at -10 °C for 4 hours, charging and discharging were performed at each corresponding C-rate for 10 seconds, while sequentially varying the C-rate to 0.2C, 0.5C, 1.0C, 1.5C, 2.0C, 2.5C and 3.0C at a 60% state of charge (SOC) point at 25 °C. Then, the terminal voltage points were plotted to construct a linear equation, and the slope of the resulting line was adopted as the DCIR.

The DCIR measured during the initial resistance evaluation was defined as R1, and the DCIR measured during the resistance evaluation after low-temperature resistance evaluation was defined as R2. The DCIR increase rate was calculated as follows, and the results are shown in Table 2 below.

$$\text{DCIR increase rate (\%)} = R2 / R1 \times 100$$

(2) Evaluation of low-temperature capacity retention

The lithium secondary batteries of the examples and comparative examples were subjected to three cycles of charging at 25 °C using 0.5C CC/CV (3.65 V, 0.05C cut-off) and discharging using 0.5C CC (2.5 V cut-off). The discharge

capacity C1 at the third cycle was then measured.

The lithium secondary batteries were then charged at -10 °C for 2 hours at 0.58 A, 3.65 V CC-CV, and then discharged to 2.5 V with a current of 0.58 A. The discharge capacity C2 was measured. The capacity retentionwas calculated as follows, and the results are shown in Table 2.

$$\text{Capacity retention (\%)} = C2 / C1 \times 100$$

**Experimental Example 3: Evaluation of high-temperature storage properties (60 °C)**

(1) Evaluation of resistance after high-temperature storage

After the lithium secondary batteries of the examples and comparative examples were left under ambient exposure conditions at 60 °C for 12 weeks (using a thermostatic device), charging and discharging were performed at each corresponding C-rate for 10 seconds, while sequentially varying the C-rate to 0.2C, 0.5C, 1.0C, 1.5C, 2.0C, 2.5C and 3.0C at a 60% state of charge (SOC) point at 25 °C. Then, the terminal voltage points were plotted to construct a linear equation, and the slope of the resulting line was adopted as the DCIR.

The DCIR measured during the initial resistance evaluation was defined as R1, and the DCIR measured during the resistance evaluation after high-temperature storage was defined as R3. The DCIR increase rate was calculated as follows, and the results are shown in Table 2 below.

$$\text{DCIR increase rate (\%)} = R3 / R1 \times 100$$

(2) Measurement of capacity retention(Ret) after high-temperature storage

The lithium secondary batteries of the examples and comparative examples were subjected to three cycles of charging at 25 °C using 0.5C CC/CV (3.65 V, 0.05C cut-off) and discharging using 0.5C CC (2.5 V cut-off). The discharge capacity C1 at the third cycle was then measured.

The charged lithium secondary batteries were stored at 60 °C for 12 weeks, then additionally left at room temperature for 30 minutes, and subsequently subjected to 0.5C CC discharge (2.5 V cut-off), where the discharge capacities C3 were measured. The capacity retention was calculated according to the following equation and the results are shown in Table 2 below.

$$\text{Capacity retention (\%)} = C3 / C1 \times 100$$

**Experimental Example 4: Evaluation of high-temperature cycle life properties (45 °C)**

The lithium secondary batteries of the examples and comparative examples were charged at 1C to 3.65 V and discharged at 1C to 2.5 V at 45 °C. This charge and discharge cycle was repeated 600 times, the discharge capacity C1 was measured at the 1st cycle and the discharge capacity C4 was measured at the 600th cycle.

The capacity retention was calculated as follows, and the results are shown in Table 2.

$$\text{Capacity retention (\%)} = C4 / C1 \times 100$$

[TABLE 2]

| | | Example | | | | Comparative Example | | |
|---|---|---|---|---|---|---|---|---|
| | | 1 | 2 | 3 | 4 | 1 | 2 | 3 |
| Initial resistance | DCIR (mΩ) | 46.6 | 49.7 | 51.5 | 57.9 | 51.2 | 52.3 | 54.6 |
| Low-temperature (-10°C) performance | Capacity retention (%) | 45.8 | 45.0 | 44.1 | 43.1 | 44.3 | 43.9 | 43.7 |
| | DCIR increase rate (%) | 293 | 299 | 313 | 337 | 311 | 319 | 320 |

(continued)

| | | Example | | | | Comparative Example | | |
|---|---|---|---|---|---|---|---|---|
| High-temperature storage properties (12 weeks) | Capacity retention (%) | 83.4 | 83.4 | 82.3 | 82.0 | 82.5 | 82.5 | 82.7 |
| | DCIR increase rate (%) | 122.4 | 127.8 | 135.3 | 140.7 | 133.1 | 134.0 | 135.4 |
| High-temperature cycle life (600 cycles) | Capacity retention (%) | 83.6 | 82.0 | 81.9 | 77.3 | 81.7 | 80.1 | 79.7 |

Referring to Tables 1 and 2 above, the lithium secondary batteries of the examples exhibited improved low-temperature (-10 °C) performance, high-temperature (60 °C) storage properties, and high-temperature (45 °C) cycle life properties.

On the other hand, the lithium secondary batteries of the comparative examples, which did not use an additive including a compound having a specific structure, exhibited high initial resistance, a high DCIR increase rate, and poor capacity retention.

The contents described above are merely examples of applying the principles of the present disclosure, and other configurations may be further included without departing from the scope of the present disclosure.

## Claims

**1.** An electrolyte for a lithium secondary battery comprising:

an additive comprising a compound having a structure represented by Formula 1 below;
an organic solvent; and
a lithium salt:

[Formula 1]

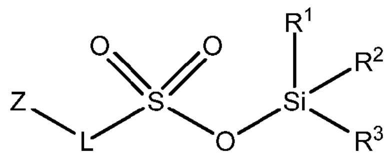

(in Formula 1, $R^1$ to $R^3$ are each independently an alkyl group having 1 to 10 carbon atoms, an alkoxy group having 1 to 10 carbon atoms, a hydroxy group, a halogen atom, or a hydrogen atom;
L is a single bond, an alkylene group having 1 to 10 carbon atoms, or an alkyleneoxy group having 1 to 10 carbon atoms; and
Z is a 5- or 6-membered heteroaryl group comprising at least one heteroatom selected from the group consisting of nitrogen, oxygen and sulfur, or a 5- or 6-membered heterocycloalkyl group comprising at least one heteroatom selected from the group consisting of nitrogen, oxygen and sulfur).

**2.** The electrolyte for a lithium secondary battery according to claim 1, wherein $R^1$ to $R^3$ are each independently an alkyl group having 1 to 6 carbon atoms, an alkoxy group having 1 to 6 carbon atoms, a hydroxy group, a halogen atom, or a hydrogen atom,

L is a single bond, an alkylene group having 1 to 6 carbon atoms, or an alkyleneoxy group having 1 to 6 carbon atoms, and
Z is a 5- or 6-membered heteroaryl group comprising at least one nitrogen atom or a 5- or 6-membered heterocycloalkyl group comprising at least one oxygen atom.

**3.** The electrolyte for a lithium secondary battery according to any one of claims 1 and 2, wherein $R^1$ to $R^3$ are each independently an alkyl group having 1 to 4 carbon atoms, an alkoxy group having 1 to 4 carbon atoms, a hydroxy

group, a halogen atom, or a hydrogen atom,

L is a single bond, an alkylene group having 1 to 4 carbon atoms, or an alkyleneoxy group having 1 to 4 carbon atoms, and
Z is a 5-membered heteroaryl group comprising two nitrogen atoms or a 5-membered heterocycloalkyl group comprising one oxygen atom.

**4.** The electrolyte for a lithium secondary battery according to any one of claims 1 to 3, wherein $R^1$ to $R^3$ are each independently an alkyl group having 1 to 10 carbon atoms,

L is a single bond or an alkyleneoxy group having 1 to 10 carbon atoms, and
Z is a 5- or 6-membered heteroaryl group comprising two to four heteroatoms selected from the group consisting of nitrogen, oxygen and sulfur, or a 5- or 6-membered heterocycloalkyl group comprising one heteroatom selected from the group consisting of nitrogen, oxygen and sulfur.

**5.** The electrolyte for a lithium secondary battery according to any one of claims 1 to 4, wherein the compound having the structure represented by Formula 1 comprises a compound having a structure represented by Formula 2-1 or Formula 2-2 below:

[Formula 2-1]

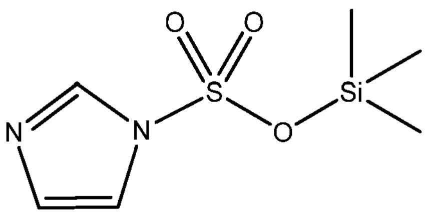

[Formula 2-2]

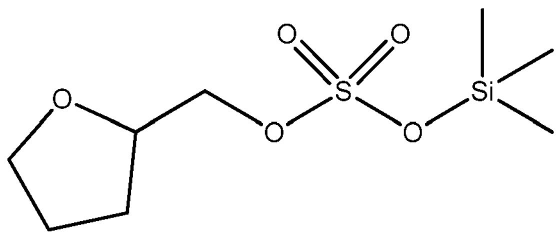

**6.** The electrolyte for a lithium secondary battery according to any one of claims 1 to 5, wherein the organic solvent comprises at least one selected from the group consisting of a carbonate organic solvent, an ester organic solvent, an ether organic solvent, a ketone organic solvent, and an aprotic organic solvent.

**7.** The electrolyte for a lithium secondary battery according to any one of claims 1 to 6, wherein the organic solvent comprises a cyclic carbonate solvent and a linear carbonate solvent.

**8.** The electrolyte for a lithium secondary battery according to any one of claims 1 to 7, wherein the content of the additive is 0.1% by weight to 10% by weight based on the total weight of the electrolyte.

**9.** The electrolyte for a lithium secondary battery according to any one of claims 1 to 8, wherein the electrolyte further comprises at least one auxiliary additive selected from the group consisting of a cyclic carbonate compound, a fluorine-containing carbonate compound, a sultone compound, a borate compound, a lithium phosphate compound and a sulfate compound.

**10.** The electrolyte for a lithium secondary battery according to claim 9, wherein the content of the auxiliary additive is 0.01% by weight to 10% by weight based on the total weight of the electrolyte.

**11.** The electrolyte for a lithium secondary battery according to any one of claims 1 to 10, wherein the electrolyte further comprises an auxiliary additive comprising a cyclic carbonate compound and a fluorine-containing carbonate compound.

**12.** A lithium secondary battery comprising:

an electrode assembly comprising a cathode and anode that are repeatedly stacked; and
the electrolyte for a lithium secondary battery according to any one of claims 1 to 11, which impregnates the electrode assembly.

**13.** The lithium secondary battery according to claim 12, wherein the cathode comprises a cathode active material comprising a lithium phosphate-based active material.

**14.** The lithium secondary battery according to claim 13, wherein the cathode active material comprises lithium metal phosphate particles represented by Formula 3 below:

[Formula 3] $Li_wM_xP_yO_{4+z}$

(in Formula 3, $0.9 \leq w \leq 1.2$, $0.99 \leq x \leq 1.01$, $0.9 \leq y \leq 1.2$, $-0.1 \leq z \leq 0.1$, and M is at least one selected from the group consisting of Fe, Ni, Mn, Ti, and V).

**15.** The lithium secondary battery according to claim 14, wherein M is Fe.

[FIG. 1]

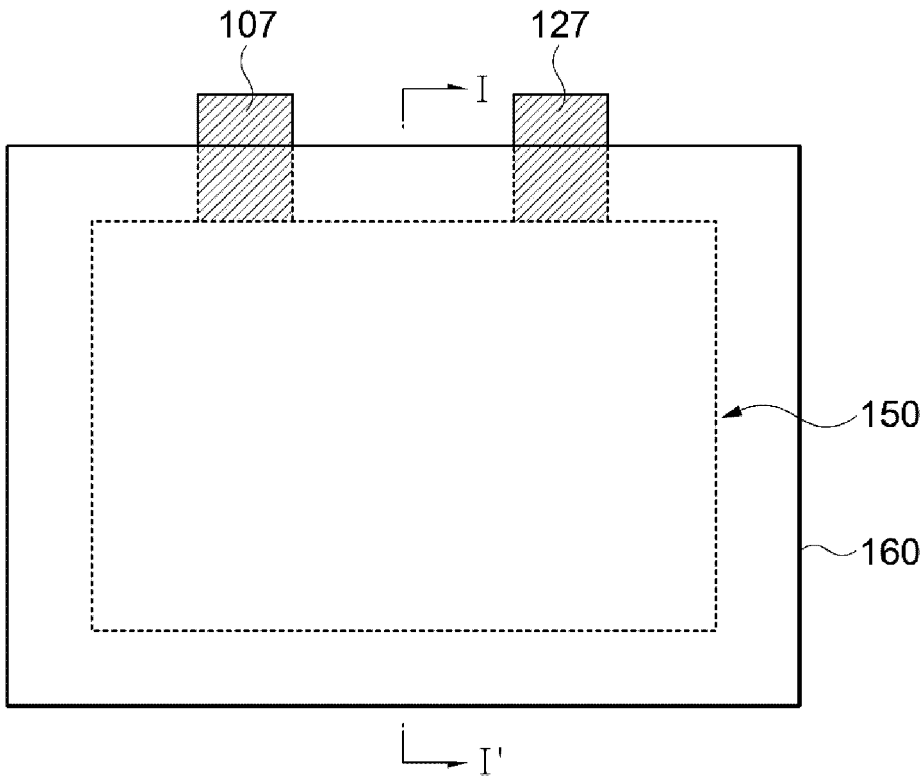


[FIG. 2]

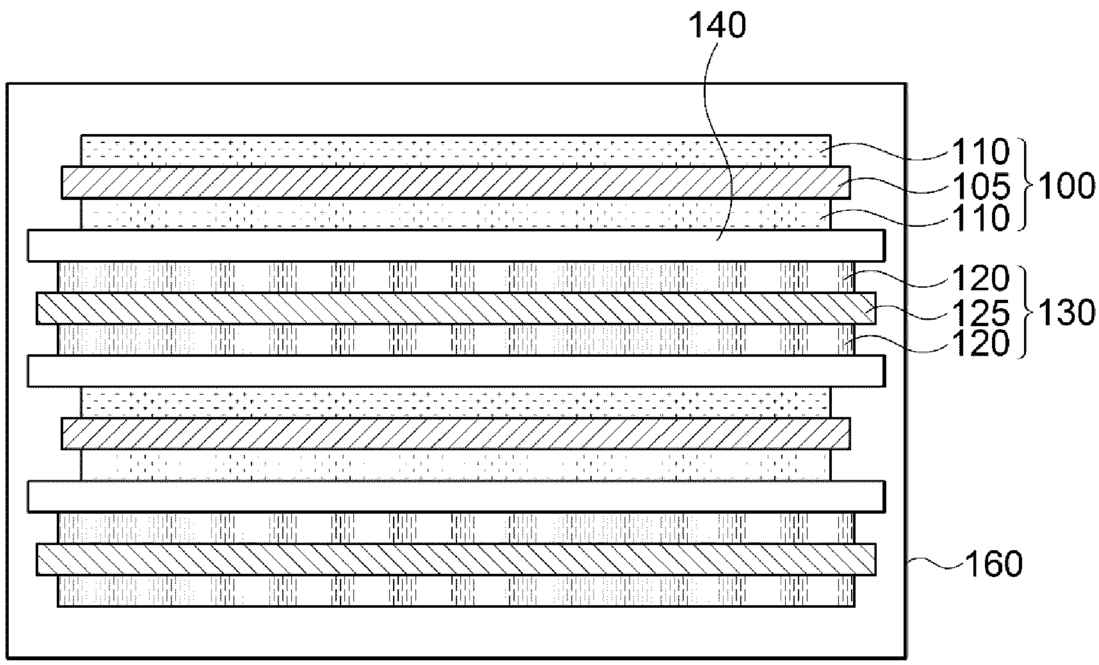

Europäisches Patentamt
European Patent Office
Office européen des brevets

# EUROPEAN SEARCH REPORT

Application Number
EP 25 20 1521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/420738 A1 (CAO GEJIN [CN] ET AL) 28 December 2023 (2023-12-28)<br>* paragraphs [0051], [0085] - [0086]; claims 1-24 *<br>----- | 1-15 | INV.<br>H01M4/58<br>H01M10/0525<br>H01M10/0567 |
| X | EP 4 007 030 A1 (SAMSUNG SDI CO LTD [KR]) 1 June 2022 (2022-06-01)<br>* paragraphs [0068] - [0070], [0124] - [0136]; claims 1-14; examples 1-4 *<br>----- | 1-15 | |

TECHNICAL FIELDS SEARCHED (IPC)
H01M

The present search report has been drawn up for all claims

1

| Place of search | Date of completion of the search | Examiner |
|---|---|---|
| The Hague | 15 January 2026 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 1521

This annex lists the patent family members relating to the patent documents cited in the above-mentioned European search report. The members are as contained in the European Patent Office EDP file on
The European Patent Office is in no way liable for these particulars which are merely given for the purpose of information.

15-01-2026

| Patent document cited in search report | Publication date | Patent family member(s) | Publication date |
|---|---|---|---|
| US 2023420738 A1 | 28-12-2023 | CN 113013491 A | 22-06-2021 |
| | | EP 4290636 A1 | 13-12-2023 |
| | | KR 20230140593 A | 06-10-2023 |
| | | US 2023420738 A1 | 28-12-2023 |
| | | WO 2022193554 A1 | 22-09-2022 |
| EP 4007030 A1 | 01-06-2022 | CN 114730919 A | 08-07-2022 |
| | | EP 4007030 A1 | 01-06-2022 |
| | | KR 20210015072 A | 10-02-2021 |
| | | US 2022263132 A1 | 18-08-2022 |
| | | WO 2021020864 A1 | 04-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *CHEMICAL ABSTRACTS*, 17872-98-9